# EUROPEAN PATENT APPLICATION

(11) **EP 1 743 717 A1**
(43) Date of publication of application: **17.01.2007**
(21) Application number: 06076390.1
(22) Date of filing: 10.07.2006
(51) Int. Cl.: B09C 1/06, F23G 7/14, C10J 3/00

(54) **Method for decontaminating soil**

(30) Priority: 14.07.2005 BE 200500356
(71) Applicant: Bio Olie Belgie besloten vennootschap met beperkte aansprakelijkheid, 3980 Tessenderlo (BE)
(72) Inventor: van Stijn, Marinus G.E., 3640 Kinrooi (BE)
(74) Representative: Donné, Eddy

(57) **Abstract**

Method for decontaminating soil whereby the soil to be decontaminated is subjected to oxidation by heating it in an oxide reactor (1), characterised in that it mainly consists of performing a biomass pyrolysis in a pyrolysis reactor (2); in transferring at least a part of the solid residue from a drain (17) of the pyrolysis reactor (2) to a supply (6) of the oxide reactor (1); and in incinerating this solid residue so as to incinerate contaminations from the soil to be decontaminated.

## Description

The present invention concerns a method for decontaminating soil, in particular for decontaminating soil in an energy-saving manner.

It is known to decontaminate for example soil which has been contaminated with oil by means of an oxidation process, whereby the soil is heated to a high temperature in the presence of oxygen in an oxide reactor, such that the oil and other combustible waste products are incinerated and leave the reactor in the form of waste gases, whereas the decontaminated soil retains its solid state and can be discharged from the reactor.

A major disadvantage of this method for decontaminating soil however, is that heating the soil requires a lot of energy, as a result of which decontaminating the soil is relatively expensive.

Another disadvantage is that the decontaminated soil is hot after the above-mentioned oxidation, so that relatively much energy is lost when said decontaminated soil is discharged from the reactor as such, all the more as the heat energy cannot be efficiently recovered from the decontaminated soil.

The present invention aims to remedy one or several of the above-mentioned and other disadvantages.

To this end, the present invention concerns a method for decontaminating soil whereby the soil to be decontaminated is subjected to oxidation by heating it in an oxide reactor, which method mainly consists in performing a biomass pyrolysis in a pyrolysis reactor; in transferring at least a part of the solid residue of the pyrolysis to the oxide reactor; and in incinerating this solid residue so as to incinerate contaminations from the soil to be decontaminated.

An advantage of the present invention is that the fuel for heating the soil to be decontaminated can be obtained at a relatively low cost in the form of the solid residue of a pyrolysis process, as a result of which the costs for decontaminating soil can be restricted.

The heat carrier of the outlet of the oxide reactor is preferably transferred to the inlet of the pyrolysis reactor.

In that case, the use of the solid residue of a pyrolysis process for incinerating biomass is particularly advantageous since, when incinerating the solid residue in the oxide reactor, not only the contaminations are incinerated, but also the heat carrier is heated up to a temperature which is sufficiently high to maintain the pyrolysis reactor at operating temperature.

In other words, incinerating the solid residue supplies the required energy to decontaminate the soil, as well as to keep up the pyrolysis reaction, such that decontaminating the soil with a method according to the invention does not require any additional energy.

In order to better explain the characteristics of the invention, the following preferred methods according to the invention for decontaminating soil are given as an example only without being limitative in any way, with reference to the accompanying drawings, in which:
figure 1 schematically represents a method according to the invention;
figure 2 represents a variant of figure 1.

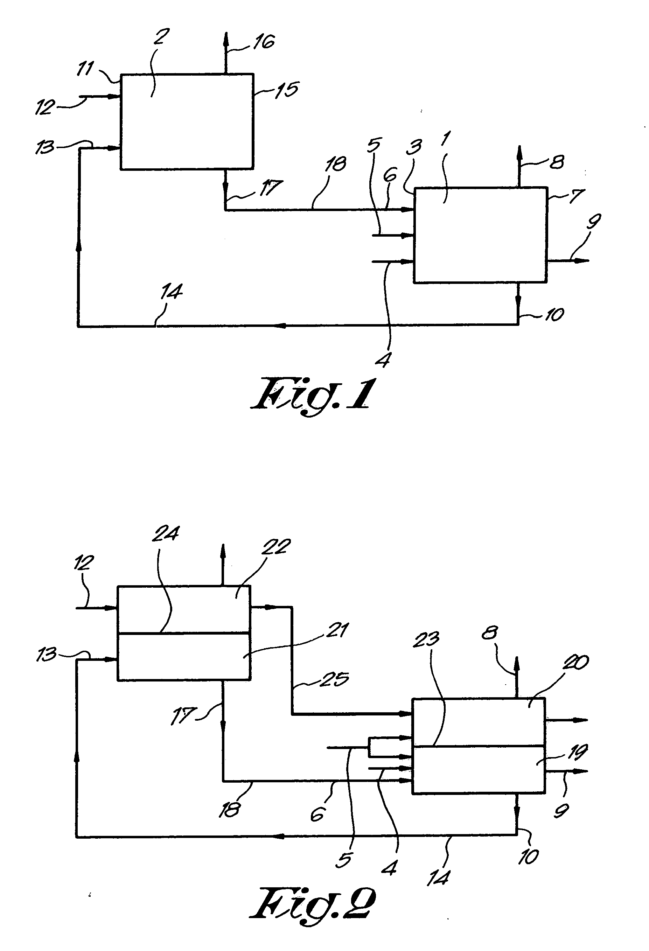

Figure 1 schematically represents a method for decontaminating polluted soil, whereby the term soil in this case should be understood as earth, sludge, sand, boulders and the like.

For the method according to the invention is in this case applied a device which mainly consists of two reactors, in particular an oxide reactor 1 in which the soil is decontaminated and a pyrolysis reactor 2 in which an amount of biomass can be reduced under anoxic or oxygen-poor conditions.

Both reactors 1 and 2 are preferably of the prop-flow reactor type, whereby the soil to be decontaminated, the biomass to be processed respectively, are not evenly distributed over the reactors 1 and 2 concerned, but whereby the degree in which the soil to be decontaminated is processed or the biomass is reduced depends on the position in the reactors 1 and 2.

The oxide reactor 1 comprises a supply 4 on its inlet side 3 for the soil to be decontaminated, a supply 5 for oxygen and a supply 6 for a mixture of a fuel and a heat carrier, in particular an amount of solid matter with a large heat storage capacity, such as for example sand.

On its outlet side 7 are provided a drain 8 for waste gases; a drain 9 for decontaminated soil; and a drain 10 for the heat carrier.

On its inlet side 11, the pyrolysis reactor 2 is provided with a supply 12 for biomass on the one hand, and a supply 13 for the above-mentioned heat carrier on the other hand which is connected to the above-mentioned drain 10 of the oxide reactor 1 by means of a pipe 14.

On the outlet 15 of the pyrolysis reactor 2 is provided a drain 16 for gases and/or liquids and a drain 17 for, in this case, the solid residue of the pyrolysis forming the fuel for the oxide reactor 1, as well as for the heat carrier, whereby said drain 17 is connected to the above-mentioned supply 6 of the oxide reactor 1 by means of a pipe 18.

The method according to the invention for decontaminating soil is simple and as follows.

When operational, the soil to be decontaminated is supplied into the oxide reactor 1 via the supply 4 and mixed with a mixture of the above-mentioned heat carrier and the solid residue, which is supplied from the pyrolysis reactor 2 via the supply 6.

Further, oxygen is added to the oxide reactor 1 so as to obtain a complete combustion of the fuel.

By combusting the fuel, the incineration of the contaminations in the soil to be decontaminated is initiated and kept up, as a result of which these contaminations are removed from the soil in the form of waste gases.

The incineration of the solid residue also results in the heat carrier being heated, which, as a result, reaches a temperature on the outlet side 7 of the oxide reactor 1 which is at least sufficiently high to maintain the pyrolysis reactor 2 at an operational temperature.

The decontaminated soil may be excreted on the outlet side 7 of the oxide reactor 1, whereas the incinerated contaminations leave the oxide reactor 1 via the drain 8 for waste gases.

The heat carrier is removed from the oxide reactor 1 via the drain 10 and transferred to the pyrolysis reactor 2 via the pipe 14, whereby, as mentioned, the heat which is stored in the heat carrier is used to keep up the temperature in the pyrolysis reactor 2.

In the pyrolysis reactor 2, an amount of biomass is cracked at a high temperature and a low oxygen pressure. This cracking results in a gas and/or liquid fraction which can be stored and used as high-grade fuel, and a solid residue of long carbon chains which, when being incinerated, usually produce more energy than needed to keep up the temperature in the pyrolysis reactor 2.

It should be noted that, when the amount of solid residue formed in the pyrolysis reactor 2 contains more energy than necessary to keep up the incineration of contaminations in the soil to be decontaminated and to heat the heat carrier up to a desired temperature, it is sufficient to transfer only a part of the solid residue to the oxide reactor 1.

The non-transferred solid residue fraction may in that case be used as a fuel for other purposes, such as drying the biomass or the soil to be decontaminated.

According to the invention, the above-mentioned solid residue is transferred to the oxide reactor 1, either or not together with the heat carrier, where the solid residue is used as a fuel for decontaminating the soil, after which the above-described cycle starts again.

It should be noted that instead of sand or the like, also the decontaminated soil can be used as a heat carrier.

In the latter case, the soil to be decontaminated is preferably added to the heat carrier between the outlet side 7 of the oxide reactor 1 and the inlet side 11 of the pyrolysis reactor 2.

Indeed, supplying an amount of cold soil to be decontaminated to the hot heat carrier makes it possible to adjust the temperature of the heat carrier in the pyrolysis reactor 2, so that it can be maintained at a required operational temperature.

It is clear that, when adding soil to be decontaminated, also a part of the decontaminated soil may possibly be discharged.

Figure 2 represents a variant of a method according to the invention whereby the heat carrier and the soil to be decontaminated are heated indirectly.

Both reactors 1 and 2 in this case contain two compartments 19, 20 and 21, 22 respectively, which are separated by a partition wall 23, 24 respectively which is illustrated in figure 2.

It is clear that both compartments 19, 20 and 21, 22 of each reactor 1, 2 preferably have a large common contact surface and that one of both compartments is preferably formed of a series of pipes to this end which are provided through the other compartment in the reactor 1, 2, whereby the partition wall 23-24 between both compartments 19, 20 and 21, 22 respectively is formed by the wall of said pipes.

The device for decontaminating soil contains an additional pipe 25 between the outlet side 15 of the pyrolysis reactor 2 and the inlet side 3 of the oxide reactor 1, which pipe 25 connects the outlet side 15 of the compartment 22 for biomass to the inlet side 3 of the corresponding compartment 20 in the oxide reactor 1.

An advantage of this variant is that the biomass and the solid residue formed thereof remain strictly separated from the heat carrier and the soil to be decontaminated, as a result of which the ashes of the solid residue are not mixed with the decontaminated soil.

This is particularly appropriate when the pyrolysis reactor 2 is being fed with pure biomass, whose solid residue produces a pure ash residue which can be used as an ingredient for chemical manure.

The present invention is by no means limited to the embodiments described above and represented in the accompanying drawings; on the contrary, such a method for decontaminating soil can be realised according to many different variants while still remaining within the scope of the invention.

## Claims

1. Method for decontaminating soil whereby the soil to be decontaminated is subjected to oxidation by heating it in an oxide reactor (1), **characterised in that** it mainly consists of performing a biomass pyrolysis in a pyrolysis reactor (2); in transferring at least a part of the solid residue from a drain (17) of the pyrolysis reactor (2) to a supply (6) of the oxide reactor (1); and in incinerating this solid residue so as to incinerate contaminations from the soil to be decontaminated.

2. Method according to claim 1, **characterised in that** use is made of a heat carrier which is transferred from a drain (10) of the oxide reactor to a supply (13) of the pyrolysis reactor (2).

3. Method according to claim 2, **characterised in that** the heat carrier has a required temperature at the supply (13) of the pyrolysis reactor (2) which makes it possible to keep up the required temperature in the pyrolysis reactor (2).

4. Method according to claim 3, **characterised in that** the temperature at the supply (13) of the pyrolysis reactor (2) is adjusted by adding the soil to be decontaminated to the heat carrier between the drain (10) concerned of the oxide reactor (1) and the above-mentioned supply (13) of the pyrolysis reactor (2).

5. Method according to claim 2, **characterised in that** the heat carrier contains at least decontaminated soil.

6. Method according to claim 2, **characterised in that** the heat carrier contains at least sand.

7. Method according to claim 4, **characterised in that** a part of the decontaminated soil in the heat carrier is replaced by soil to be decontaminated.

8. Method according to claim 1, **characterised in that** the soil to be decontaminated is heated indirectly.
